## Europäisches Patentamt

## European Patent Office

## Office européen des brevets

(19)

(11) Numéro de publication: **0 276 613 B1**

(12) **FASCICULE DE BREVET EUROPEEN**

(45) Date de publication du fascicule du brevet:
02.08.89

(51) Int. Cl.⁴: **F16D 23/14**

(21) Numéro de dépôt: **87402977.0**

(22) Date de dépôt: **23.12.87**

(54) **Butée de débrayage, notamment pour véhicule automobile.**

(30) Priorité: **29.12.86  FR 8618294**

(43) Date de publication de la demande:
**03.08.88 Bulletin 88/31**

(45) Mention de la délivrance du brevet:
**02.08.89 Bulletin 89/31**

(84) Etats contractants désignés:
**DE GB**

(56) Documents cités:
**EP-A- 0 030 165**
**WO-A-81/00142**
**FR-A- 2 195 297**
**FR-A- 2 544 429**

(73) Titulaire: **VALEO, 64 Avenue de la Grande Armée,
F-75017 Paris(FR)**

(72) Inventeur: **Lassiaz, Philippe, 20, rue Thiers,
F-92100 Boulogne(FR)**
Inventeur: **Villata, Gino, Via Moriondo 32,
I-14021 Buttigliera D'Asti(IT)**
Inventeur: **Beccaris, Carlo, Via Trinita 19,
I-10026 Santena (Torino)(IT)**

ACTORUM AG

**Description**

La présente invention concerne d'une manière générale les butées de débrayage du type de celles mises en oeuvre par exemple pour l'équipement de véhicules automobiles.

Ainsi qu'on le sait, une telle butées de débrayage comporte, globalement, un élément de manoeuvre, qui est destiné à être soumis à un organe de commande, en pratique une fourchette de débrayage, et un élément d'attaque, qui, soit directement, soit indirectement, est en appui axial contre l'élément de manoeuvre, et qui, sous l'action de celui-ci, est destiné à agir sur le dispositif débrayeur de l'embrayage à commander.

La présente invention vise plus particulièrement le cas où l'appui axial de l'élément d'attaque sur l'élément de manoeuvre se fait sous le contrôle de moyens élastiques à action axiale.

C'est le cas, notamment, dans les butées de débrayage autocentreuses à autocentrage maintenu, dans lesquelles, un jeu annulaire étant prévu à cet effet, l'élément d'attaque bénéficie, par rapport à l'élément de manoeuvre, dans les limites de ce jeu, et sous le contrôle, précisément, des moyens élastiques à action axiale mis en oeuvre, d'une latitude omnidirectionnelle de cheminement dans un plan perpendiculaire à l'axe de l'ensemble.

Des butées de débrayage de ce type se trouvent notamment décrites dans le brevet française qui, déposé le 21 Mars 1975 sous le No 75 08847, a été publié sous le No 2.304.829, et dans le brevet français qui, déposé le 4 Décembre 1979 sous le No 79 29788, a été publié sous le No 2.470.898.

Dans les butées de débrayage correspondantes, il est avantageusement tiré parti des moyens élastiques à action axiale mis en oeuvre pour assurer par ailleurs l'assujettissement axial nécessaire entre l'élément d'attaque et l'élément de manoeuvre.

Dans le FR-A 2 304 829, ces moyens élastiques à action axiale sont constitués par une rondelle annulaire, du type rondelle Belleville, qui, par l'une quelconque de ses périphéries interne ou externe, prend appui sur l'un quelconque des éléments que constituent l'élément d'attaque et l'élément de manoeuvre, et qui, le long de l'autre de ses dites périphéries, est dotée de pattes par lesquelles elles agrippe l'autre desdits éléments.

Par exemple, l'élément de manoeuvre comportant, transversalement, pour l'appui axial de l'élément d'attaque, un flasque, et ledit élément de manoeuvre comportant, lui-même, transversalement, pour appui axial sur ledit flasque, un bord tombé, ce qui correspond à des modalités particulièrement avantageuses de fabrication, cette rondelle annulaire dotée de pattes intervient entre ce flasque et ce bord tombé.

Cette disposition, qui a notamment pour avantage de permettre une mise en place axiale de l'ensemble des pièces à assembler, a donné et donne encore satisfaction, au moins pour certains applications.

Pour d'autres, la présence d'une rondelle peut être à l'origine d'une gêne, dans la mesure où elle mobilise de manière circulairement continue de la place, ce qui peut rendre plus malaisée l'intervention nécessaire de l'organe de commande.

En outre, cette rondelle doit inévitablement être adaptée en diamètre à la butée de débrayage qu'elle équipe, et, en pratique, il faut donc le plus souvent prévoir une rondelle distincte par type de butée de débrayage, ce qui conduit à une multiplication des fabrications correspondantes.

Enfin, il n'est pas toujours facile de contrôler la façon dont l'élasticité propre à cette rondelle se trouve transmise aux éléments concernés par les pattes qui lui sont associées, en sorte que, d'une de ces pattes à l'autre, l'effort élastique appliqué à ces éléments peut être différent en/ou incertain.

Dans le FR-A 2 470 898, les moyens élastiques à action axiale mis en oeuvre sont par contre formés par un nombre limité de crampons élastiques distincts dépourvus de toute liaison entre eux.

Il s'agit, en pratique, de cavaliers élastiques en U, qui, intervenant, eux aussi, entre le flasque de l'élément de manoeuvre et un bord tombé de l'élément d'attaque, sont engagés radialement sur ce flasque et ce bord tombé, et dont les seules parties constitutives, à savoir les deux ailes, s'étendent donc l'une et l'autre radialement par rapport à l'axe de l'ensemble.

Ces crampons ou cavaliers élastiques formant chacun individuellement une pièce distincte, il faut en assurer, individuellement, pour qu'ils n'échappent pas intempestivement aux éléments sur lesquels ils sont engagés, un maintien radial convenable en position sur ceux-ci, ce qui ne manque pas de compliquer les fabrications correspondantes, au préjudice du prix de revient de l'ensemble.

En outre, s'agissant de cavaliers, leur mise en place sur les éléments à enserrer se fait nécessairement radialement, ce qui n'est pas sans compliquer singulièrement le montage de l'ensemble, au détriment de la productivité.

Enfin, par leur partie médiane, ces cavaliers ne sont pas sans avoir une emprise non négligeable à la périphérie des éléments qu'ils enserrent, et ils peuvent faire saillie radialement au-delà de ceux-ci, au risque d'être intempestivement l'objet d'une action d'arrachement lors des manipulations de l'ensemble et/ou d'augmenter de manière non négligeable l'encombrement diamétral de celui-ci.

Dans le brevet français déposé sous le No 79 17887 le 10 Juillet 1979 et publié sous le No 2.461.158, il a été proposé, par contre, de faire venir d'un seul tenant de l'élément de manoeuvre les moyens élastiques à action axiale à mettre en oeuvre, soit que ces moyens élastiques se présentent alors sous forme de pattes s'étendant globalement axialement pour venir se crocheter sur le bord tombé de l'élément d'attaque, après, éventuellement, traversée de celui-ci, soit qu'ils se présentent sous la forme de pattes s'étendant globalement radialement pour venir coiffer chacune localement un tel bord tombé.

Si, par elle-même, une telle disposition permet d'assurer de manière simple le maintien radial de telles pattes, puisque ces pattes font corps avec l'un des deux éléments concernés, en l'espèce l'élément de manoeuvre, elle conduit inévitablement à une complication de fabrication non négligeable pour celui-ci.

La présente invention a d'une manière générale pour objet une disposition permettant d'éviter ces divers inconvénients et conduisant à un compromis particulièrement satisfaisant entre les diverses exigences à satisfaire.

De manière plus précise, elle a pour objet une butée de débrayage, notamment pour véhicule automobile, du genre comportant, globalement, un élément de manoeuvre, qui est destiné à être soumis à un organe de commande, et un élément d'attaque, qui, soit directement, soit indirectement, et sous le contrôle de moyens élastiques à action axiale formés par un nombre limité de crampons élastiques distincts dépourvus de toute liaison entre eux, est en appui axial contre l'élément de manoeuvre, et qui, sous l'action de celui-ci, est destiné à agir sur le dispositif débrayeur d'un embrayage, ledit élément de manoeuvre comportant, transversalement, pour l'appui axial de l'élément d'attaque, un flasque, et ledit élément d'attaque comportant, lui-même, transversalement, pour appui axial sur ledit flasque, un bord tombé, cette butée de débrayage étant d'une manière générale caractérisée en ce que, chacun desdits crampons élastiques comportant globalement, d'une part, une partie axiale, c'est-à-dire une partie qui s'étend globalement axialement, et, d'autre part, une partie radiale, c'est-à-dire une partie qui s'étend globalement radialement, par l'une desquelles il prend appui axialement sur l'élément de manoeuvre tandis que par l'autre il porte axialement sur l'élément d'attaque, et dont la partie radiale, au moins, est élastiquement déformable axialement, ladite partie axiale d'un tel crampon élastique traverse le flasque de l'élément de manoeuvre à l'occasion d'une ouverture de celui-ci, et, pour le maintien radial de ce crampon élastique par rapport à l'ensemble, il est prévu, sur l'élément de manoeuvre, deux rainures axiales, qui sont chacune respectivement disposées de part et d'autre de ladite ouverture de celui-ci, et avec lesquelles ladite partie axiale d'un tel crampon élastique est au moins localement en prise.

Outre le fait que, s'agissant de crampons élastiques dépourvus de toute liaison entre eux, un maintien radial convenable de ces crampons élastiques se trouve assuré de manière très simple et efficace par les rainures axiales avec lesquelles ils sont en prise, cette disposition conduit avantageusement à un encombrement diamétral minimal, ces crampons élastiques trouvant avantageusement leur place à la périphérie interne du flasque de l'élément de manoeuvre, au raccordement, en pratique, de ce flasque avec le manchon de cet élément de manoeuvre, lorsque, comme il est usuel, un tel flasque est issu radialement d'un tel manchon.

Il résulte donc des crampons élastiques suivant l'invention une avantageuse libération de place, favorable à l'implantation de l'organe de commande, alors même que celle-ci se trouve déjà favorisée par l'absence de liaison entre ces crampons élastiques.

Il en résulte, en outre, une avantageuse possibilité de standardisation, des crampons élastiques de même type pouvant avantageusement être mis en oeuvre pour des butées de débrayage de types différents.

Il en résulte, encore, l'effort élastique qu'ils appliquent aux éléments concernés leur étant exclusivement dû, une avantageuse possibilité d'un meilleur contrôle de cet effort élastique.

Il en résulte, enfin, une relative facilité de montage, leur mise en place se faisant avantageusement axialement.

Les caractéristiques et avantages de l'invention ressortiront d'ailleurs de la description qui va suivre, à titre d'exemple, en référence aux dessins schématiques annexés sur lesquels :

la figure 1 est une vue partielle en coupe axiale d'une butée de débrayage suivant l'invention ;

la figure 2 est une vue partielle en élévation de cette butée de débrayage, suivant la flèche II de la figure 1 ;

la figure 3 est une vue partielle en perspective, vue de l'arrière, de l'élément de manoeuvre que comporte de manière usuelle une telle butée de débrayage ;

la figure 4 est une vue en perspective d'un des crampons élastiques dont est équipée suivant l'invention cette butée de débrayage ;

la figure 5 est une vue en plan, suivant la flèche V de la figure 4, de ce crampon élastique ;

la figure 6 est une vue partielle en perspective analogue à celle de la figure 3, et concerne une variante de réalisation de l'élément de manoeuvre de la butée de débrayage suivant l'invention ;

la figure 7 est une vue partielle en plan analogue à celle de la figure 5, et concerne une variante de réalisation des crampons élastiques suivant l'invention pour la variante de réalisation de l'élément de manoeuvre représentée à la figure 6 ;

la figure 8 est une autre vue partielle en perspective analogue à celle de la figure 3, et concerne une autre variante de réalisation de l'élément de manoeuvre de la butée de débrayage suivant l'invention;

la figure 9 est une autre vue partielle en plan analogue à celle de la figure 5, et concerne une variante de réalisation des crampons élastiques suivant l'invention pour la variante de réalisation de l'élément de manoeuvre représenté à la figure 8 ;

la figure 10 est une autre vue partielle on perspective analogue à celle de la figure 3, et concerne une autre variante de réalisation de l'élément de manoeuvre de la butée de débrayage suivant l'invention ;

la figure 11 est une vue partielle en coupe axiale analogue à celle de la figure 1, et concerne une variante de réalisation de la butée de débrayage suivant l'invention ;

la figure 12 est une vue partielle en perspective, vue de l'arrière, de l'élément de manoeuvre mis en oeuvre dans cette variante de réalisation.

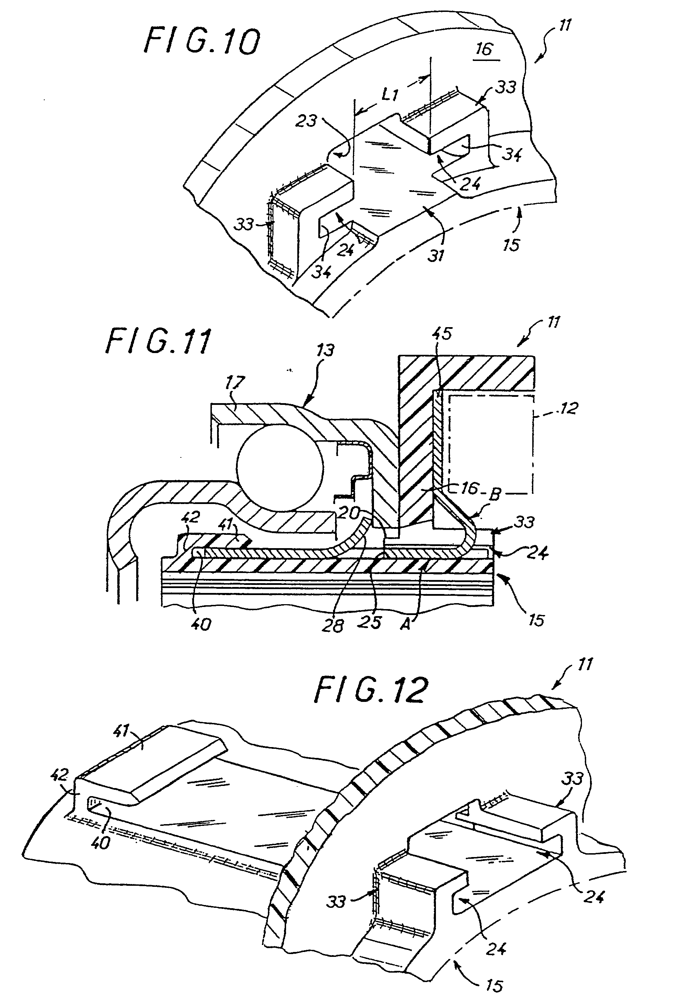

Tel qu'illustré sur ces figures une butée de débrayage 10 suivant l'invention comporte, globalement, un élément de manoeuvre 11, qui est destiné à être soumis à un organe de commande, en pratique une fourchette de débrayage, dont seul l'un des doigts a été schématisé, en traits interrompus, sous la référence 12, à la figure 11, et un élément d'attaque 13, qui, soit directement, soit indirectement, et sous le contrôle de moyens élastiques à action axiale détaillés ultérieurement, est en appui axial contre l'élément de manoeuvre 11, et qui, sous l'action de celui-ci, est destiné à agir sur le dispositif débrayeur d'un embrayage non représenté.

De manière connue en soi, l'élément de manoeuvre 11 comporte, axialement, pour son engagement sur un quelconque organe de support et de guidage, non représenté, un manchon 15, et, transversalement, pour l'appui axiale de l'élément d'attaque 13, un flasque 16, qui, en pratique, s'étend annulairement autour du manchon 15, en saillie sur la surface extérieure de celui-ci.

L'ensemble est avantageusement réalisé en matière synthétique, par moulage de celle-ci.

De manière également connue en soi, l'élément d'attaque 13 est constitué par un roulement à billes, dont une des bagues est adaptée à venir en appui axial contre l'élément de manoeuvre 11, tandis que l'autre est adaptée à agir sur le dispositif débrayeur d'un embrayage.

Dans les formes de réalisation représentées, c'est la bague extérieure 17 de ce roulement à billes qui est adaptée à venir en appui contre l'élément de manoeuvre 11, et, plus précisément, contre le flasque 16 de celui-ci, cette bague extérieure 17 comportant elle-même à cet effet, transversalement, pour appui sur ce flasque 16, un bord tombé 18 dirigé radialement vers l'axe de l'ensemble.

Conjointement, dans les formes de réalisation représentées, c'est la bague intérieure 19 du roulement à billes constituant l'élément d'attaque 13 qui est adaptée à agir sur le dispositif débrayeur d'un embrayage.

Dans les formes de réalisation représentées, cette bague intérieure 19 a, à cet effet, un profil arrondi à son extrémité libre.

En variante, elle peut comporter elle-même transversalement, à son extrémité libre, un bord tombé dirigé radialement en direction opposée à l'axe de l'ensemble.

Quoi qu'il en soit, dans les formes de réalisation représentées, l'appui axial entre l'élément d'attaque 13 et l'élément de manoeuvre 11 se fait directement, par contact direct entre le bord tombé 18 de la bague extérieure 17 du roulement à billes constituant cet élément d'attaque 13 et le flasque transversal 16 de cet élément de manoeuvre 11.

S'agissant, en pratique, d'une butée de débrayage autocentreuse, et, plus précisément, compte tenu des moyens élastiques à action axiale mis en oeuvre, d'une butée de débrayage autocentreuse à autocentrage maintenu, un jeu annulaire est laissé libre entre la tranche du bord tombé 18 de l'élément d'attaque 13 et une nervure 20 présente en saillie à la périphérie interne du flasque 16 de l'élément de manoeuvre 11, au raccordement de ce flasque 16 avec le manchon 15 dont il est issu.

Ces dispositions sont bien connues par elles-mêmes, et ne faisant pas en soi l'objet de la présente invention, elles ne seront pas décrites plus en détail ici.

De manière également connue en soi, les moyens élastiques à action axiale mis en oeuvre pour contrôler l'appui axial de l'élément d'attaque 13 sur l'élément de manoeuvre 11 sont formés par un nombre limité de crampons élastiques distincts 22 dépourvus de toute liaison entre eux.

Suivant l'invention, chacun de ces crampons élastiques 22 comportant globalement, d'une part, une partie axiale A, c'est-à-dire une partie qui s'étend globalement axialement, et, d'autre part, une partie radiale B, c'est-à-dire une partie qui s'étend globalement radialement, par l'une desquelles il prend appui axialement sur l'élément de manoeuvre 11 tandis que par l'autre il porte axialement sur l'élément d'attaque 13, et dont la partie radiale B, au moins, est élastiquement déformable, ladite partie axiale A d'un tel crampon élastique traverse le flasque 16 de l'élément de manoeuvre 11 à l'occasion d'une ouverture 23 de celui-ci, et, pour le maintien radial d'un tel crampon élastique 22 par rapport à l'ensemble, il est prévu, sur l'élément de manoeuvre 11, deux rainures axiales 24, qui sont chacune respectivement disposées de part et d'autre de ladite ouverture 23 de celui-ci, et avec lesquelles ladite partie axiale A d'un tel crampon élastique 22 est au moins localement en prise.

Dans les formes de réalisation représentées, seuls deux crampon élastique 22 sont prévus, en positions diamétralement opposées l'un par rapport à l'autre, et il s'agit de pièces dont chacune est formée d'un tronçon de feuillard en acier à ressort convenablement découpé et conformé.

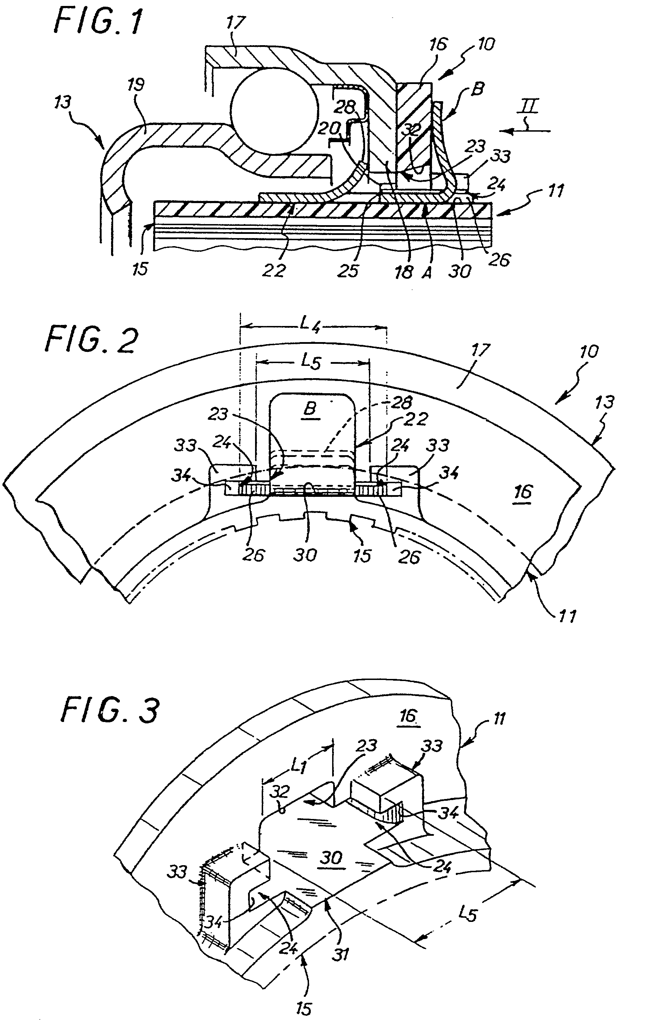

Dans la forme de réalisation plus particulièrement représentée sur les figures 1 à 5, la partie axiale A d'un tel crampons élastiques 22 forme en pratique une semelle sensiblement plane, avec, dans sa partie médiane, et pour des raisons qui apparaîtront ci-après, un crevé 25, et sa partie radiale B, qui est axialement dans l'alignement de la partie axiale A, mais en présentant une largeur moindre que celle de celle-ci, s'étend en continuité avec la partie axiale A, sensiblement en S, à compter d'une zone d'enracinement à cette partie axiale A qui est légèrement en retrait par rapport à l'extrémité correspondante de celle-ci.

Ainsi donc, dans la forme de réalisation représentée sur ces figures 1 à 5, la partie axiale A forme deux pattes 26 de part et d'autre de la racine de la partie radiale B.

A son autre extrémité, et pour des raisons qui apparaîtront ci-après, la partie axiale A a ses angles abattus par des chanfreins 27.

Chaque crampon élastique 22 ainsi constitué prend appui par sa partie radiale B sur l'élément de manoeuvre 11, et, plus précisément, sur le flasque 16 de cet élément de manoeuvre 11, du côté de ce flasque 16 opposé à l'élément d'attaque 13, et, par sa partie axiale A, il traverse ledit flasque 16, à l'occasion de l'ouverture 23 prévue à cet effet dans celui-ci, pour venir porter, de l'autre côté de ce flasque 16, sur l'élément d'attaque 13, et, plus précisément, sur le bord tombé 18 de cet élément d'attaque 13.

Pour porter ainsi sur ce bord tombé 18, la partie axiale A d'un crampon élastique 22 présente une languette 28, qui, résultant du crevé 25 de cette partie axiale A, fait saillie sur celle-ci, du même côté que la partie radiale B, et est élastiquement déformable, au moins radialement.

En pratique, les ouvertures 23 que présente l'élément de manoeuvre 11 s'étendent à la périphérie interne de son flasque 16, c'est-à-dire au raccordement de ce flasque 16 avec le manchon 15 dont celui-ci est issu radialement.

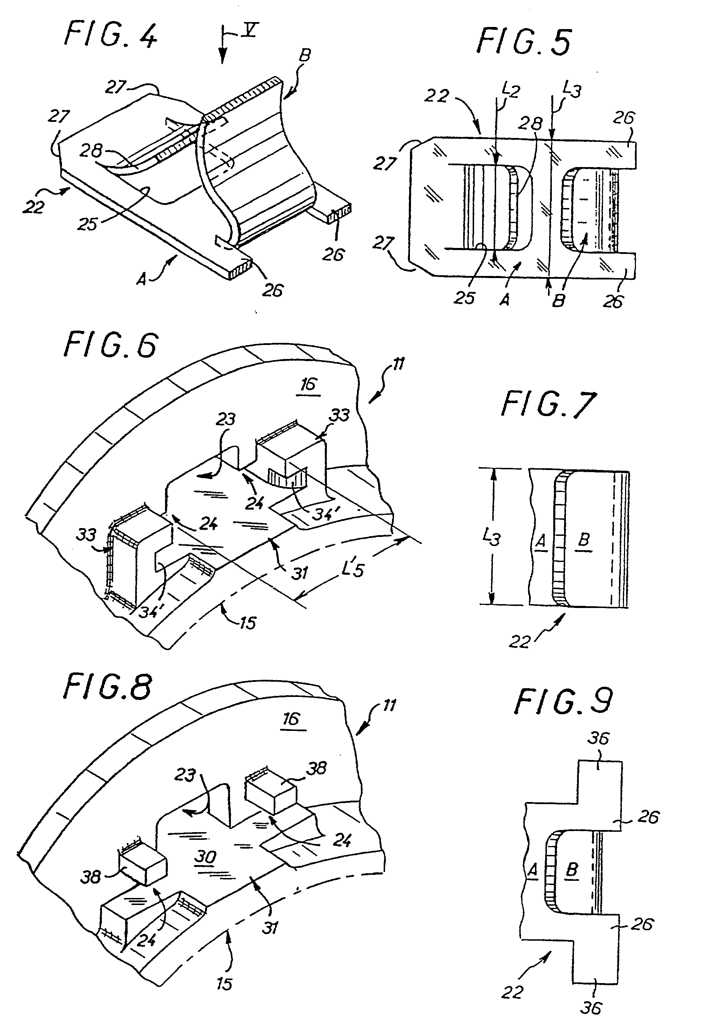

Dans la forme de réalisation plus particulièrement représentée sur les figures 1 à 5, la largeur L1 d'une telle ouverture 23, figure 3, n'est, dans sa partie courante, que légèrement supérieure à la largeur L2 de la languette 28 d'un crampon élastique 22, figure 5, pour le passage de cette languette 28.

Cette largeur L1 est donc inférieure, dans cette forme de réalisation, à la largeur L3 de la partie axiale A d'un crampon élastique 22, figure 5, l'engagement de cette partie axiale A se faisant à la faveur des rainures axiales 24 associées, suivant l'invention, à une telle ouverture 23.

Dans la forme de réalisation plus particulièrement représentée sur les figures 1 à 5, ces rainures axiales 24 sont présentes à la base d'une telle ouverture 23, en débouchant chacune circonférentiellement, c'est-à-dire sensiblement tangentiellement, dans celle-ci.

Autrement dit, dans cette forme de réalisation, celle des parois d'une telle rainure axiale 24 qui est radialement la plus proche de l'axe de l'ensemble est en continuité avec la paroi 30 correspondante, ou fond, de l'ouverture 23 concernée.

Dans la forme de réalisation représentée, ce fond 30 est plat, à l'image de la partie axiale A d'un crampon élastique 22, et il s'étend suivant un plan qui, dans sa partie médiane, est sensiblement tangent à une circonférence de l'ensemble, en formant, à la surface du manchon 15, un bossage 31.

En outre, dans la forme de réalisation représentée, la paroi 32 d'une ouverture 23 opposée à son fond 30, ou "toit", est oblique par rapport à ce fond 30, en convergeant vers celui-ci en direction de l'élément d'attaque 13.

A son débouché du côté de cet élément d'attaque 13, la hauteur d'une telle ouverture 23 est inférieure à la saillie que fait, au repos, par rapport au plan de la partie axiale A d'un crampon élastique 22, la languette 28 que comporte cette partie axiale A.

Les rainures axiales 24, dont les fonds respectifs sont établis à une distance L4 l'un de l'autre légèrement, figures 2 et 3, supérieure à la largeur L3 de la partie axiale A d'un crampon élastique 22, affectent, en continuité, tant le flasque 16 de l'élément de manoeuvre 11 que la nervure 20 présente à la périphérie interne de celui-ci.

Dans la forme de réalisation plus particulièrement représentée sur les figures 1 à 5, ces rainures axiales 24 se prolongent en outre axialement au-delà du flasque 16 de l'élément de manoeuvre 11 par rapport à l'élément d'attaque 13, à la faveur de deux bossages 33 qui, radialement en saillie sur le manchon 15 de l'élément de manoeuvre 11, à la périphérie interne de son flasque 16, s'étendent axialement à compter de ce flasque 16 en direction opposée à l'élément d'attaque 13, en flanquant chacun respectivement l'ouverture 23 concernée.

En pratique, dans cette forme de réalisation, ces bossages 33 sont établis à une distance L5 l'un de l'autre, figure 3, supérieure à la largeur L1 de la partie courante de l'ouverture 23 qu'ils flanquent, et, à la différence du bossage 31, qui, lui, s'étend jusqu'à l'extrémité du manchon 15, ils s'arrêtent à distance de celle-ci.

Enfin, dans cette forme de réalisation, à leur partie axiale disposée du côté de la partie raidale B d'un crampon élastique 22, c'est-à-dire, en pratique, à leur extrémité axiale disposée du côté des bossages 33, dans l'épaisseur de ceux-ci, les fonds des rainures axiales 24 prévues suivant l'invention présentent chacun respectivement des tronçons obliques 34 qui vont en convergeant l'un vers l'autre en direction du flasque 16 de l'élément de manoeuvre 11.

Quoi qu'il en soit, et ainsi qu'on le notera, les rainures axiales 24 débouchant dans l'ouverture 23 à laquelle elles sont associées, elles appartiennent en quelque sorte à cette ouverture 23 dans cette forme de réalisation.

Ainsi qu'il est aisé de la comprendre, la réalisation en matière synthétique moulée de l'élément de manoeuvre 11 facilite l'obtention pour celui-ci d'ouvertures 23 et de rainures axiales 24 ainsi constituées.

Au montage, l'élément d'attaque 13 est engagé axialement sur le manchon 15 de l'élément de manoeuvre 11, jusqu'à contact de son bord tombé 18 avec le flasque transversal 16 de ce dernier.

Il est alors procédé, de l'autre côté de ce flasque 16, à l'engagement axial des crampons élastiques 22 dans les ouvertures 23 que comporte à cet effet ce flasque transversal 16, avec venue en prise, par leurs tranches, de la partie axiale A de ces crampons élastiques 22 avec les rainures axiales 24 présentes à la base de ces ouvertures 23.

Cet engagement, se trouve facilité tant par les chanfreins 27 abattant les angles de l'extrémité d'engagement correspondante que comporte cette partie axiale A, que par l'obliquité du tronçon initial 34 des fonds des rainures axiales 24.

Quoi qu'il en soit, au cours de cet engagement, la languette 28 des crampons élastiques 22 se trouve mise sous contrainte par le "toit" 32 oblique des ouvertures 23 correspondantes, ladite languette 28 se déformant alors élastiquement en direction de l'axe de l'ensemble, cependant que la partie radiale B desdits crampons élastiques 22 vient axialement en appui contre le flasque 16 de l'élément de manoeuvre 11.

L'engagement axial des crampons élastiques 22 est alors poursuivi jusqu'à ce que, franchissant le bord tombé 18 de l'élément d'attaque 13, la languette 28 de leur partie axiale A, ainsi libérée, reprenne sa configuration initiale et vienne ainsi porter sur ce bord tombé 18, du côté de celui-ci opposé au flasque 16 de l'élément de manoeuvre 11.

L'ensemble constitué par le flasque 16 de l'élément de manoeuvre 11 et le bord tombé 18 de l'élément d'attaque 13 se trouvent alors conjointement serrés élastiquement entre, d'une part, la languette 28 de la partie axiale A des crampons élastiques 22, et, d'autre part, la partie radiale B de ceux-ci, ce qui assure aussi bien le contrôle élastique de l'appui axial correspondant que l'assujettissement axial nécessaire entre l'élément d'attaque 13 et l'élément de manoeuvre 11.

Dans la variante de réalisation illustrée par les figures 6 et 7, la distance L'5 séparant l'un de l'autre les bossages 33 de l'élément de manoeuvre 11 est légèrement supérieure à la largeur L3 de la partie axiale A des crampons élastiques 22, en sorte que la partie courante, au moins, des rainures axiales 24 flanquant à sa base l'ouverture 23 correspondante de cet élément de manoeuvre 11 n'affecte que la nervure 20 et le flasque 16 de celui-ci, sans se prolonger sur lesdits bossages 33.

En alignement avec ces rainures 24, ces bossages 33 sont cependant affectés, à leur base, du côté opposé au flasque 16, d'un chanfrein 34' propre à faciliter l'engagement axial des crampons élastiques 22.

En pratique, et suivant des dispositions analogues à celles décrites précédemment, les chanfreins 34' ainsi associés aux rainures axiales 24 vont en convergeant l'un vers l'autre en direction du flasque 16 de l'élément de manoeuvre 11.

En outre, dans cette variante de réalisation, figure 7, la partie radiale B des crampons élastiques 22 s'étend sur toute la largeur de leur partie axiale A.

Dans cette variante de réalisation, les crampons élastiques 22 ne comportent donc pas de pattes 26 de part et d'autre de leur partie radiale B.

Dans la variante de réalisation illustrée par les figures 8, 9, les crampons élastiques 22 comportent à nouveau des pattes 26 de part et d'autre de leur partie radiale B, à la racine de celle-ci, cette partie radiale B ayant une largeur moindre que la partie axiale A à laquelle elle est associée, mais, pour coopération avec les rainures axiales 24 correspondantes de l'élément de manoeuvre 11, détaillées ci-après, ces pattes 26 présentent chacune, en directions circonférentiellement opposées l'une par rapport à l'autre, un prolongement circonférentiel 36.

En pratique, les prolongements circonférentiels 36 que présente ainsi chacun des crampons élastiques 22 s'étendent tangentiellement, dans un même plan, qui est celui de la semelle que forme leur partie axiale A.

Conjointement, formées chacune entre deux éléments, détaillés ci-après, faisant axialement saillie sur le flasque 16 de l'élément de manoeuvre 11, les rainures axiales 24 n'appartiennent plus, comme précédemment, à l'ouverture 23 à laquelle elles sont associées mais, au contraire, décalées axialement par rapport à cette ouverture 23, elles sont indépendantes de celle-ci.

En pratique, pour l'une et l'autre des rainures axiales 24, l'un de ces éléments est formé par le manchon 15 de l'élément de manoeuvre 11, et, plus précisément, par le bossage 31, qui, tangentiel à ce manchon 15, s'étend à niveau avec le fond 30 de l'ouverture 23 concernée, ce bossage 31 débordant alors largement latéralement de part et d'autre de celle-ci.

Pour chacune des rainures axiales 24, l'autre des éléments est un ergot 38, qui, axialement en saillie sur le flasque 16, s'étend parallèlement au bossage 31 précédent, à distance de celui-ci.

Autrement dit, dans cette variante de réalisation, les rainures 24 sont formées entre, d'une part, un bossage tangentiel 31 du manchon 15 de l'élément de manoeuvre 11, et, d'autre part, deux ergots 38 disposés chacun respectivement de part et d'autre de l'ouverture 23 concernée du flasque 16 de cet élément de manoeuvre 11, et c'est par les prolongements circonférentiels 36 de leur partie axiale A que les crampons élastiques 22 sont adaptés à venir en prise avec de telles rainures axiales 24.

Dans la variante de réalisation illustrée par la figure 10, l'élément de manoeuvre 11 comporte, comme dans les formes de réalisation illustrées par les figures 1 à 7, des bossages 33, mais ceux-ci s'étendent à une distance l'un de l'autre égale à la largeur L1 de l'ouverture 23 qu'ils flanquent.

Autrement dit, ces bossages 33 s'étendent alors au ras des parois transversales de cette ouverture 23.

Il en est de même dans la variante de réalisation illustrée par les figures 11, 12, dans laquelle, cependant, ces bossages 33 s'étendent sur toute la longueur du manchon 15 de l'élément de manoeuvre 11 du côté du flasque 16 de celui-ci opposé à l'élément d'attaque 13, en épousant, extérieurement, la forme des rainures axiales 24 correspondantes.

En outre, dans cette forme de réalisation, il est prévu, à l'autre extrémité du manchon 15 de l'élément de manoeuvre 11, c'est-à-dire à son extrémité située du même côté de son flasque 16 que l'élément d'attaque 13, dans l'alignement de chacune des ouvertures 23, une fente 40 dans laquelle vient s'insérer, pour son maintien radial, l'extrémité concernée de la partie axiale A du crampon élastique 22 correspondant.

En pratique, dans cette forme de réalisation, cette fente 40 est formée entre le manchon 15 de l'élément de manoeuvre 11 et une patte 41 qui, issue, par un retour en équerre 42, de ce manchon 15, s'étend parallèlement à celui-ci, en direction du flasque 16.

De préférence, et tel que représenté, pour faciliter l'insertion de l'extrémité de la partie axiale A d'un crampon élastique 22 dans la fente 40 ainsi formée, le bord libre de la patte 41 délimitant cette fente 40 est chanfreiné.

Enfin, dans cette variante de réalisation, la partie radiale B de chaque crampon élastique 22 se prolonge, radialement, en direction opposée à l'axe de l'ensemble, par une patte 45 propre à former une plaque anti-usure à l'égard de l'organe de commande associé, et, donc, plus précisément, à l'égard du doigt 12 correspondant de celui-ci.

Dans la forme de réalisation représentée, les fonds des rainures 24 sont droits sur toute leur longueur, mais, comme précédemment, ils peuvent aussi bien présenter un tronçon oblique à leur extrémité opposée à l'élément d'attaque 13.

Bien entendu, la présente invention ne se limite pas aux formes de réalisation décrites et représentées, mais englobe toute variante d'exécution et/ou de combinaison de leurs divers éléments.

En particulier, si, dans les formes de réalisation plus particulièrement décrites et représentées, l'engagement axial des crampons élastiques 22 se fait du côté du flasque 16 de l'élément de manoeuvre 11 opposé à l'élément d'attaque 13, cet engagement axial peut aussi bien se faire, au moins dans certaines applications, du côté de cet élément d'attaque.

Dans ce cas, les crampons élastiques 22 prennent appui axialement, par leur partie radiale B, sur le bord tombé 18 de l'élément d'attaque 13, et, par leur partie axiale A, ils portent axialement sur le flasque 16 de l'élément de manoeuvre 11, du côté opposé de ce flasque 16 après traversée de celui-ci.

En outre, la semelle de ces crampons élastiques 22 n'est pas nécessairement plane ; au contraire elle pourrait par exemple tout aussi bien être cintrée, par exemple à la courbure du manchon de l'élément de manoeuvre.

**Revendications**

1) Butée de débrayage, notamment pour véhicule automobile, du genre comportant, globalement, un élément de manoeuvre (11), qui est destiné à être soumis à un organe de commande, et un élément d'attaque (13), qui, soit directement, soit indirectement, et sous le contrôle de moyens élastiques à action axiale formés par un nombre limité de crampons élastiques distincts (22) dépourvus de toute liaison entre eux, est en appui axial contre l'élément de manoeuvre (11), et qui, sous l'action de celui-ci, est destiné à agir sur le dispositif débrayeur d'un embrayage, ledit élément de manoeuvre (11) comportant, transversalement, pour l'appui axial de l'élément d'attaque (13), un flasque (16), et ledit élément d'attaque (13) comportant, lui-même, transversalement, pour appui axial sur ledit flasque (16), un bord tombé (18), caractérisée en ce que, chacun desdits crampons élastiques (22) comportant globalement, d'une part, une partie axiale (A), c'est-à-dire une partie qui s'étend globalement axialement, et, d'autre part, une partie radiale (B), c'est-à-dire une partie qui s'étend globalement radialement, par l'une desquelles il prend appui axialement sur l'élément de manoeuvre (11) tandis que par l'autre il porte axialement sur l'élément d'attaque (13), et dont la partie radiale (B), au moins, est élastiquement déformable axialement, ladite partie axiale (A) d'un tel crampon élastique traverse le flasque (16) de l'élément de manoeuvre (11), à l'occasion d'une ouverture (23) de celui-ci, et, pour le maintien radial de ce crampon élastique par rapport à l'ensemble, il est prévu, sur l'élément de manoeuvre (11), deux rainures axiales (24), qui sont chacune respectivement disposées de part et d'autre de ladite ouverture (23) de celui-ci, et avec lesquelles ladite partie axiale (A) d'un tel crampon élastique est au moins localement en prise.

2) Butée de débrayage suivant la revendication 1, caractérisé en ce que lesdites rainures axiales (24) appartiennent à l'ouverture (23) à laquelle elles sont associées.

3) Butée de débrayage suivant la revendication 2, caractérisé en ce que lesdites rainures axiales (24) sont présentes à la base de l'ouverture (23) à laquelle elles sont associées, en débouchant chacune circonférentiellement dans celle-ci.

4) Butée de débrayage suivant l'une quelconque des revendications 2, 3, caractérisée en ce que lesdites rainures axiales (24) se prolongent axialement au-delà du flasque (16) de l'élément de manoeuvre (11) par rapport à l'élément d'attaque (13), à la faveur de deux bossages (33) flanquant chacun respectivement l'ouverture (23) à laquelle elles sont associées.

5) Butée de débrayage suivant la revendication 1, caractérisée en ce que, formés chacune entre deux éléments (15, 38) faisant axialement saillie sur le flasque (16) de l'élément de manoeuvre (11), lesdites rainures axiales (24) sont indépendante de l'ouverture (23) dudit flasque (16) à laquelle elles sont associées et elles sont décalées axialement par rapport à celle-ci.

6) Butée de débrayage suivant l'une quelconque des revendications 1 à 5, caractérisée en ce que, pour porter sur l'élément sur lequel elle doit agir, la partie axiale (A) d'un crampon élastique (22) présente, en rebroussement en direction de la partie radiale (B) à laquelle elle est associée, une languette élastiquement déformable radialement (28).

7) Butée de débrayage suivant la revendication 6, caractérisée en ce que, chaque crampon élastique (22) étant formée d'un tronçon de feuillard en acier à ressort convenablement découpé et conformé, la languette (28) de sa partie axiale (A) résulte d'un crevé (25) de celle-ci.

8) Butée de débrayage suivant la revendication 7, caractérisée en ce que la partie axiale (A) d'un crampon élastique (22) forme, disposées chacune respectivement de part et d'autre de la racine de la partie radiale (B) à laquelle elle est associée, deux pattes (26).

9) Butée de débrayage suivant l'une quelconque des revendications 1 à 8, caractérisé en ce que, chaque crampon élastique (22) prend appui par sa partie radiale (B) sur l'élément de manoeuvre (11) et porte sa partie axiale (A) sur l'élément d'attaque (13).

10) Butée de débrayage suivant la revendication 9, caractérisée en ce que chaque crampon élastique (22) prend appui, par sa partie radiale (B), sur le flasque (16) de l'élément de manoeuvre (11), du côté de celui-ci opposé à l'élément d'attaque (13), et, de l'autre côté dudit flasque (16), il porte, par sa partie axiale (A), sur le bord tombé (18) dudit élément d'attaque (13).

**Patentansprüche**

1. Kupplungsausrücklager, insbesondere für ein Kraftfahrzeug, von der Art, die im wesentlichen ein Bedienungselement (11) enthält, das für die Einwirkung eines Bedienungsorgans bestimmt ist, sowie ein Treibelement (13), welches entweder direkt oder indirekt und unter der Einwirkung von axial wirksamen elastischen Elementen, die aus einer begrenzten Anzahl unterschiedlicher elastischer Klammern (22) ohne jede Verbindung untereinander bestehen, axial am Bedienungselement (11) aufliegt und welches unter dessen Einwirkung auf die Ausrückvorrichtung einer Kupplung einwirken soll, wobei das genannte Bedienungselement (11) in Querrichtung zur axialen Abstützung des Treibelements (13) einen Flansch (16) aufweist, und wobei das genannte Treibelement (13) wiederum in Querrichtung für die axiale Abstützung auf dem genannten Flansch (16) eine abwärts gerichtete Kante (18) aufweist, dadurch gekennzeichnet, daß jede der genannten elastischen Klammern (22) im wesentlichen einerseits einen axialen Teil (A) aufweist, das heißt einen Teil, der sich im wesentlichen in Längsrichtung erstreckt, und andererseits einen radialen Teil (B), das heißt einen Teil, der sich im wesentlichen in radialer Richtung erstreckt, von denen einer zur axialen Auflage auf dem Bedienungselement (11) dient, während der andere zur axialen Auflage auf dem Treibelement (13) dient, und wobei wenigstens der radiale Teil (B) in Längsrichtung elastisch verformbar ist, während der genannte axiale Teil (A) einer solchen elastischen Klammer mittels einer darin angebrachten Öffnung (23) durch den Flansch (16) des Bedienungselements (11) hindurchtritt, und daß für die radiale Befestigung dieser elastischen Klammer im Verhältnis zur gesamten Einheit am Bedienungselement (11) zwei axiale Nuten (24) vorgesehen sind, die jeweils auf beiden Seiten der genannten Öffnung (23) angeordnet sind und mit denen der genannte axiale Teil (A) einer solchen elastischen Klammer mindestens lokal in Eingriff steht.

2. Kupplungsausrücklager gemäß Anspruch 1, dadurch gekennzeichnet, daß die genannten axialen Nuten (24) zu der Öffnung (23) gehören, mit der sie verbunden sind.

3. Kupplungsausrücklager gemäß Anspruch 2, dadurch gekennzeichnet, daß die genannten axialen Nuten (24) am Fuß der Öffnung (23) vorgesehen sind, mit der sie in Verbindung stehen, und jeweils am Umfang darin einmünden.

4. Kupplungsausrücklager gemäß einem der Ansprüche 2, 3, dadurch gekennzeichnet, daß die genannten axialen Nuten (24) sich in axialer Richtung über den Flansch (16) des Bedienungselements (11) im Verhältnis zum Treibelement (13) mit Hilfe von zwei Vorsprüngen (33) hinaus erstrecken, die jeweils die Öffnung (23) flankieren, mit der sie in Verbindung stehen.

5. Kupplungsausrücklager gemäß Anspruch 1, dadurch gekennzeichnet, daß die genannten axialen Nuten (24), die jeweils zwischen zwei Elementen (15, 38) ausgebildet sind, welche in Längsrichtung am Flansch (16) des Bedienungselements (11) vorspringen, von der Öffnung (23) des genannten Flanschs (16) unabhängig sind, mit der sie in Verbindung stehen, und daß sie axial im Verhältnis dazu versetzt angeordnet sind.

6. Kupplungsausrücklager gemäß einem der Ansprüche 1 bis 5, dadurch gekennzeichnet, daß der axiale Teil (A) einer elastischen Klammer (22), um auf dem zu betätigenden Element aufzuliegen, durch Umkehr in Richtung des radialen Teils (B), womit er in Verbindung steht, eine in Längsrichtung elastisch verformbare Lasche (28) aufweist.

7. Kupplungsausrücklager gemäß Anspruch 6, dadurch gekennzeichnet, daß, da jede elastische Klammer (22) aus einem entsprechend zugeschnittenen und ausgebildeten Stück Federstahlband gefertigt ist, die Lasche (28) des axialen Teils (A) aus einem Einschnitt (25) darin resultiert.

8. Kupplungsausrücklager gemäß Anspruch 7, dadurch gekennzeichnet, daß der axiale Teil (A) einer elastischen Klammer (22) zwei Klammern (26) bildet, die jeweils auf beiden Seiten der Wurzel des radialen Teils (B), womit sie in Verbindung steht, angeordnet sind.

9. Kupplungsausrücklager gemäß einem der Ansprüche 1 bis 8, dadurch gekennzeichnet, daß jede elastische Klammer (22) mit ihrem radialen Teil (B) auf dem Bedienungselement (11) aufliegt und mit dem axialen Teil (A) auf dem Treibelement (13) aufliegt.

10. Kupplungsausrücklager gemäß Anspruch 9, dadurch gekennzeichnet, daß jede elastische Klammer (22) mit dem radialen Teil (B) auf dem Flansch (16) des Bedienungselements (11) auf der Seite aufliegt, die dem Treibelement (13) gegenüberliegt, und auf der anderen Seite des genannten Flanschs (16) mit dem axialen Teil (A) auf der abwärts gerichteten Kante (18) des genannten Treibelements (13) aufliegt.

**Claims**

1. A clutch release bearing, especially for automobile vehicles, of the kind comprising, overall, an operating part (11), which is intended to be subjected to a control element and a drive part (13) which, either directly or indirectly, and under the control of axially acting elastic means formed by a limited number of separate elastic cramps (22) with no connection between them, bears axially against the operating part (11), and which, under the action of the latter, is intended to act on the clutch release device of a clutch, the said operating part (11) comprising a transverse flange (16) for the drive part (13) to bear on axially, and the said drive part (13) itself comprising a transverse dropped flange (18) for axial bearing on the said flange (16), characterized in that each of the said elastic cramps (22) comprises, overall, an axial part (A), that is to say a part extending generally axially, and, on the other hand, a radial part (B), that is to say a part extending generally radially, by means of one of which it bears axially on the operating part (11), whereas by means of the other it bears axially on the drive part (13), and the radial part (B) of which, at least, is elastically deformable axially, and the said axial part (A) of such an elastic cramp (22) passes through the flange (16) of the operating part (11) by means of an opening (23) in the latter, and in order to retain this elastic cramp radially relative to the assembly, two axial grooves (24) are provided on the operating part (11), which are disposed respectively on each side of the said opening (23) of the latter, and with which the said axial part (A) of such an elastic cramp is at least locally engaged.

2. A clutch release bearing according to Claim 1, characterized in that the said axial grooves (24) form part of the opening (23) with which they are associated.

3. A clutch release bearing according to Claim 2, characterized in that the said axial grooves (24) are present at the base of the opening (23) with which they are associated, each opening circumferentially into the latter.

4. A clutch release bearing according to either one of Claims 2 and 3, characterized in that the said axial grooves (24) extend axially beyond the flange (16) of the operating part (11) relative to the drive part (13), by means of two bosses (33) each respectively flanking the opening (23) with which they are associated.

5. A clutch release bearing according to Claim 1, characterized in that the said axial grooves (24), each being formed between two elements (15, 38) projecting axially on the flange (16) of the operating part (11), are independent of the opening (23) of the said flange (16) with which they are associated, and they are displaced axially relative to the latter.

6. A clutch release bearing according to any one of Claims 1 to 5, characterized in that in order to bear axially on the element on which it must act, the axial part (A) of an elastic cramp (22) comprises a tongue, which is elastically deformable radially, turned back towards the radial part (B) with which it is associated.

7. A clutch release bearing according to Claim 6, characterized in that each elastic cramp (22) being formed from a suitably cut and shaped section of spring steel strip, the tongue (28) in its axial part (A) is made from a fold (25) formed by cutting the latter.

8. A clutch release bearing according to Claim 7, characterized in that the axial part (A) of an elastic cramp (22) forms two lugs (26) disposed respectively on each side of the base of the radial part (B) with which it is associated.

9. A clutch release bearing according to any one of Claims 1 to 8, characterized in that each elastic cramp (22) bears by means of its radial part (B) on the operating part (11) and bears by means of its axial part (A) on the drive part (13).

10. A clutch release bearing according to Claim 9, characterized in that each elastic cramp (22) bears by means of its radial part (B) on the flange (16) of the operating part (11), on the side of the latter opposite to the drive part (13) and, on the other side of the said flange (16) it bears by means of its axial part (A) on the dropped flange (18) of the said drive part (13).

FIG.1

FIG.2

FIG.3

FIG.4

FIG.5

FIG.6

FIG.7

FIG.8

FIG.9

FIG.10

FIG.11

FIG.12